# EUROPEAN PATENT SPECIFICATION

(11) **EP 3 305 715 B1**
(45) Date of publication and mention of the grant of the patent: **04.03.2020**
(21) Application number: 17189844.8
(22) Date of filing: 07.09.2017
(51) Int. Cl.: B66F 9/18

(54) **FORKLIFT, ATTACHMENT MOUNTABLE TO THE FORKLIFT, CONTROL SYSTEM FOR THE FORKLIFT ATTACHMENT, AND METHOD FOR LIFTING A LOAD**
GABELSTAPLER, AN EINEM GABELSTAPLER MONTIERBARER ANSATZ, STEUERSYSTEM FÜR DEN GABELSTAPLERANSATZ UND VERFAHREN FÜR DAS HEBEN EINER LAST
CHARIOT ÉLÉVATEUR À FOURCHE, FIXATION MONTABLE SUR LE CHARIOT ÉLÉVATEUR À FOURCHE, SYSTÈME DE COMMANDE DESTINÉ À LA FIXATION DU CHARIOT ÉLÉVATEUR À FOURCHE ET PROCÉDÉ DE LEVAGE D'UNE CHARGE

(30) Priority: 10.10.2016 FI 20165761
(43) Date of publication of application: 11.04.2018
(73) Proprietor: Auramo OY, 04401 Järvenpää (FI)
(72) Inventor: PETERSSON, Sebastian, 04401 Järvenpää (FI); RANTA, Jarkko, 04401 Järvenpää (FI); HELLGREN, Pertti, 04401 Järvenpää (FI); NYGREN, Jari, 04401 Järvenpää (FI); AALLONRANTA, Sauli, 04401 Järvenpää (FI)
(74) Representative: Berggren Oy, Helsinki & Oulu

(56) References cited:
- EP-A1- 1 649 986
- US-A- 5 292 219
- US-A- 5 417 464

## Description

The invention relates to a forklift, an attachment mountable to the forklift, a control system for the forklift attachment, and a method for lifting a load. More specifically, the case is about a forklift intended for moving paper rolls, a forklift attachment, a control system for the forklift attachment, as well as a method for lifting paper rolls.

There are several prior known solutions for the controlled lifting of paper rolls. An objective in such solutions is to determine the weight of a paper and, as a result of that, a clamping force applied to the paper roll is selected for picking up the paper roll. There are several different ways of conducting the determination of a roll weight and monitoring a lift. The clamping force adjusted in response to the weight or some other load characteristic has been set to a magnitude sufficient for ensuring that the load remains secure.

Such prior art publications include, among others, US 5 417 464 A, EP 1 649 986 A1, US 5 292 219 A, EP 1657031 B1 and EP 2043943 B1.

Documents US 5 417 464 A, EP 1 649 986 A1, US 5 292 219 A disclose the features of the preamble of claim 1.

Publication EP 1657031 B1 discloses an adaptive apparatus solution designed for load handling, wherein the clamping force is adjusted by measuring the weight of a load. The adjustment of clamping force is conducted by electrically controlling a pressure valve which increases clamping pressure in proportion to weight. The weight of a load to be picked up is weighed by picking it up by means of a longitudinally extensible lifting mechanism and by measuring various magnitudes of the reaction force. The proportioning of various reaction forces to various positions of the lifting mechanism provides a means of calculating the load weight from changes of the reaction force with respect to a position of the lifting mechanism.

Publication EP 2043943 B1 discloses a solution, wherein a pressure sensor is used for monitoring a clamping force by means of tilting and lifting a load. The clamping pressure is regulated and monitored continuously for generating a correct clamping pressure in proportion to the weight of a load.

The weight-based adjustment of a clamping force is not enough for determining the clamping force. In practice, paper rolls come in several different types. The roll of uncoated paper is light and soft, being prone to collapse and damage in excessive clamping. The roll of coated paper is heavy and hard, thus requiring strong clamping because of its weight and a slippery nature of the paper. A problem with the prior art solutions has been the determination of a necessary clamping force so as not to subject a load to excessive clamping that damages the load or to deficient clamping that allows the load to fall off. Likewise, in the process of handling a load, the dynamic forces may easily increase to such magnitudes that a roll weighed at the commencement of a lift, and clamping of the roll conducted on that basis, may result in the roll falling off as the roll is being maneuvered. Another problem in the weight-based determination of a clamping force is that the clamping force cannot be determined directly on the basis of a paper roll weight. The demand of clamping force is also strongly affected by paper grade. The clamping force required for handling heavy and coated paper-containing paper rolls is defined with a different coefficient than the clamping force needed for the handling of light and uncoated paper-containing paper rolls. The difference between a coefficient for the heavy roll and a coefficient for the light roll can be twofold.

In the present invention, the weight of a load need not be known or weighed prior to lifting the load. The control system according to the invention is implemented as an electrically controlled hydraulic system.

The clamping force of grippers is adjusted to an initial clamping level and lifting of the load is commenced. The adjustment of clamping force is conducted according to a predetermined increment or increments upwards provided that a signal about load slipping is provided by a slip sensor. The initial clamping force level can be determined to be obtained automatically once the lifting of a roll is started. There are preferably at least two selectable initial levels, but a number thereof other than this can also be determined into the program. The selection of an initial level can also be determined by the selection of a driver as long as the driver is aware of the roll being soft and light or hard and heavy. What is essential is that the control system is somehow supplied with a signal about the value of an initial clamping force level.

Once the initial clamping force level is determined, it is throughout the course of lifting and carrying a roll that the slippage between the roll and the roll-clamping grippers is monitored by a slip sensor, thus enabling, if necessary, an immediate increase of the clamping force to prevent slippage.

Solutions of the invention enable a paper roll to be automatically clamped with a necessary clamping force without having to know beforehand the roll weight or paper grade. At the same time is provided a safe technique for carrying the rolls since solutions of the invention enable an immediate automatic response to the occurrence of a roll starting to slip in the grippers during transport. Such actions are not within the capabilities of prior known solutions.

The features for a forklift, an attachment mountable to the forklift, a control system for the forklift attachment, and a method for lifting a load, according to the invention, have been presented more precisely in the independent claims. Preferred embodiments and features of the invention are presented in the dependent claims.

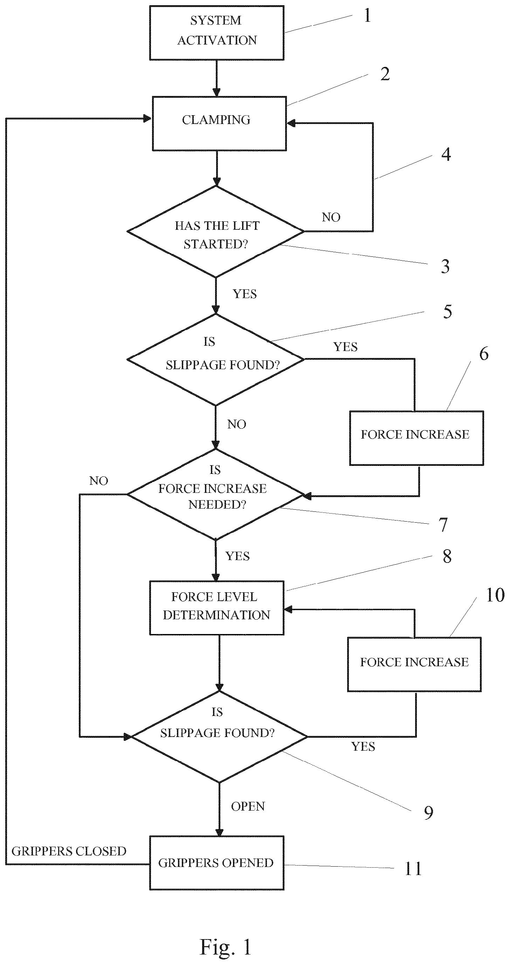

The invention will now be described in more detail by way of example with reference to the accompanying figure, which
fig. 1 shows a flowchart for a lifting mechanism control system.

In fig. 1, the lifting mechanism control system is depicted by means of a flowchart.

It is with reference numeral 1 and the term "system activation" that activation of the system is denoted in the flowchart. Following the activation, the system is in a standby mode, the clamping of a load being identified thereby. Clamping is denoted in the flowchart with the term "clamping" and reference numeral 2. Load-clamping grippers are controlled with a regulator, which is a valve used for varying the clamping force. The regulator can be included either in the clamping grippers themselves or elsewhere in forklift structures.

Once the clamping of a load is commenced, the monitoring of a load movement in relation to the clamping grippers is started at the same time. The movement monitoring is conducted with a slip sensor included in the clamping grippers. For the load clamping pressure there has been selected in advance a specific initial level. The selected initial level can be a predetermined fixed initial level or for example an initial level adjusted according to the user's choice. The initial level is adjusted in a one-off manner as the lift is started.

The necessary initial level is determined according to rolls to be handled with the forklift-gripper assembly. The first initial level must be minimally sufficient for enabling the roll to be picked up from a support surface. The arrival of a signal from a switch (e.g. a pressure switch present in the lifting line) or from a sensor (e.g. a pressure sensor present in the lifting line) is followed by determining a threshold value the crossing of which causes a pressure increase. The threshold value and the executed pressure increase depend on rolls to be handled and clamping force recommendations given thereto and can be adjusted independently. Alternatively, it is possible to use a manual selection, the initial level being in this case determined in such a way that the roll is clamped according to the roll manufacturer's recommendations (with less than maximum clamping force). Upon receiving accurate information about a roll from an external system (storage management system, barcode identification or RFID identification), the initial level can be determined for each roll type independently as there may exist a number of initial levels.

The reading of an external load-identification signal is not started until a commencement of the lift is detected. The monitoring of a lift commencement is denoted in the flowchart with the term "has the lift started?" and with reference numeral 3. If no lift has been detected, the clamping step 2 will be reinstated as indicated by an arrow denoted with reference numeral 4. The signal "has the lift started" is only read at the beginning of a lifting operation.

The system may also be implemented in a simpler manner without a signal about the commencement of a lift or an observation about a lift being started.

The commencement of a lifting operation is followed by monitoring the slippage of a load between the grippers. The monitoring of slippage is denoted in the flowchart with the term "is slippage found?" and with reference numeral 5. If slippage is detected, there will be performed an increase of clamping force as denoted in the flowchart with reference numeral 6 and the term "force increase" and proceeding to a point in the flowchart denoted with reference numeral 7 and the term "is force increase needed", at which it is considered whether a further increase of clamping is needed. In the event that a signal is received indicating a demand of force increase, there will be selected in a one-off manner a predetermined higher working range for clamping in accordance with the flowchart's reference numeral 8 and term "force level determination", such that a sufficient pressure increase is attained with the gripper. This procedure is used for proceeding from handling a roll of soft and light uncoated paper to handling a roll of hard and heavy coated paper. The magnitude of pressure increase depends on a required clamping force and is programmed in the system in advance. The signal resulting from pressure increase may comprise information about the load by way of a separate system or from a switch/sensor responding to some quality of the load. Such qualities may include, among others, weight, size, density or grade.

During the clamping sequence, the system monitors the movement of a load with respect to a clamping gripper as indicated by reference numeral 9 and the term "is slippage found?" If movement is detected, the increase of clamping force will be commenced according to reference numeral 10 and the term "force increase" denoted in the flowchart. This cycle will be continued until slippage is no longer detected and movement of the load has been successfully stopped.

The system restarts the cycle from the beginning once a release of the load, which is denoted in the flowchart with the term "open" and with reference numeral 11, has been identified and a new clamping operation has been conducted as indicated by reference numeral 2.

The identification of a load may enable a sufficient clamping force to be attained for removing the load from a support surface. However, the dynamic forces working during transport undermine the retention of a frictionally handled load. This is why the clamping conducted solely by means of a load size leads generally to excess clamping and damage to the load.

With the above-described system, the retention of a load is observed continuously. Information obtained about the qualities of a load is used for the identification of an appropriate operating range. The actual retention of a load is ensured by monitoring load movement and by the system's reactions to detected movement (slippage). The system is able to provide a handling force (clamping force) suitable for the load without extra clamping. The continuous monitoring of a load improves safety as the pressure can be increased automatically in the event of detecting load slipping. Such an automatic increase of the required clamping force is not possible in systems based on weighing the load, the weighing process being followed in the latter by setting the clamping on a specific level which is where it remains as the load weight does not change.

One preferred embodiment for a forklift attachment control system comprises;
a) a regulator used for controlling load-clamping grippers;
b) said regulator adjusting the grippers' clamping force to a predetermined initial level;
c) said regulator being supplied with a signal from a slip sensor about load slippage between the clamping grippers;
d) a signal arriving in said regulator for adjusting the clamping force to a higher initial level;
e) said regulator adjusting automatically, if necessary, the grippers' clamping force to a predetermined second, higher initial level;
f) said regulator being supplied with a signal from a slip sensor about load slippage and required further clamping throughout the entire lift and transfer of a load.

The embodiment presented in the foregoing example is also possible to carry out without a signal arriving in the regulator about activating a lift.

One preferred embodiment for a method of lifting a load with a system according to claim 1 comprises the following steps of:
a) setting the system to a standby mode by activating the system;
b) adjusting the clamping force of load-clamping grippers to a predetermined initial level;
c) if necessary, increasing the clamping force to a higher initial level;
d) starting the monitoring of a relative movement between a load and the load-clamping grippers;
e) in case of detecting a movement between the load and the load-clamping grippers, optimizing the clamping until the movement has stopped.

The foregoing embodiment for a method of lifting a load can also be carried out without a received observation about commencing a lift.

The invention relates further to a forklift attachment which includes a control system of the invention, as well as to a forklift which has mounted thereto an attachment of the invention along with its control system.
Presented above are just a few preferred embodiments of the invention, nor should those be construed as limiting a scope of protection for the invention. The scope of protection for the invention is determined in accordance with a scope of protection as defined in the appended claims.

## Claims

1. A control system for a forklift attachment, said system comprising:
a) a regulator used for controlling load-clamping grippers;
b) said regulator adjusting the grippers' clamping force to a predetermined initial level;
c) said regulator being supplied with a signal (5) from a slip sensor about load slippage between the clamping grippers;
d) a signal arriving in said regulator for adjusting the clamping force to a higher initial level; **characterized in that**
e) said regulator adjusting automatically, if necessary, the grippers' clamping force to a predetermined second, higher initial level;
f) said regulator being supplied with a signal from a slip sensor about load slippage and required further clamping (10) throughout an entire lift and transfer of the load.

2. A control system according to claim 1, **characterized in that** the control system has its regulator supplied with a signal about the initiation of a lift.

3. A control system according to claim 1, **characterized in that** the signal for determining an initial clamping force level is obtained automatically from a switch/sensor on the basis of a signal coming from an external system, or manually from the driver.

4. A control system according to any of the preceding claims, **characterized in that** the number of predetermined initial clamping force levels is at least two or more.

5. A method for lifting a load with a control system according to claim 1, said method being **characterized in that** it comprises the following steps of:
a) setting the system to a standby mode by activating (1) the system;
b) adjusting the clamping force of load-clamping grippers to a predetermined initial level;
c) if necessary, increasing (6) the clamping force to a higher initial level;
d) starting the monitoring of a relative movement (9) between a load and the load-clamping grippers;
e) in case of detecting a movement (9) between the load and the load-clamping grippers, optimizing (10) the clamping until the movement has stopped.

6. A method according to claim 5, **characterized in that** the number of initial load clamping levels is two or more.

7. A method according to claim 5 or 6, **characterized in that** the method includes an observation about initiating (3) a lift.

8. A method according to any of claims 5-7, **characterized in that** the selection of an initial load clamping level is conducted automatically on the basis of a signal coming from a switch/sensor, an external system, or on the basis of a signal obtained manually from the driver.

9. An attachment mountable to a forklift, **characterized in that** it includes a control system according to any of claims 1-4.

10. A forklift, **characterized in that** it includes an attachment according to claim 9 mountable to a forklift.

## Patentansprüche

1. Steuersystem für einen Gabelstapleransatz, das System umfassend:
a) ein Regelgerät zum Steuern von lastklammernden Greifern;
b) wobei das Regelgerät die Klammerkraft der Greifer auf eine anfängliche Stufe einstellt;
c) wobei das Regelgerät mit einem Signal (5) von einem Schlupfsensor über Lastschlupf zwischen den Klammergreifern versehen wird;
d) ein Signal, das im Regelgerät zum Einstellen der Klammerkraft auf eine höhere anfängliche Stufe ankommt; **dadurch gekennzeichnet, dass**
e) das Regelgerät die Klammerkraft der Greifer bei Bedarf automatisch auf eine vorgegebene zweite, höhere Stufe einstellt;
f) wobei das Regelgerät mit einem Signal von einem Schlupfsensor über Lastschlupf und erforderliches weiteres Klammern (10) über ein gesamtes Heben und Überführen der Last hinweg versehen wird.

2. Steuersystem nach Anspruch 1, **dadurch gekennzeichnet, dass** das Steuersystem veranlasst, dass sein Regelgerät mit einem Signal über die Einleitung eines Hubs versehen wird.

3. Steuersystem nach Anspruch 1, **dadurch gekennzeichnet, dass** das Signal zum Bestimmen einer anfänglichen Klammerkraftstufe automatisch von einem Schalter/Sensor auf der Grundlage eines Signals, das von einem externen System kommt, oder manuell vom Fahrer erhalten wird.

4. Steuersystem nach einem der vorhergehenden Ansprüche, **dadurch gekennzeichnet, dass** die Anzahl von vorbestimmten anfänglichen Klammerkraftstufen zumindest zwei oder mehr beträgt.

5. Verfahren für das Heben einer Last mit einem Steuersystem nach Anspruch 1, wobei das Verfahren **dadurch gekennzeichnet ist, dass** es die folgenden Schritte umfasst:
a) Einstellen des Systems in einem Bereitschaftsmodus durch Aktivieren (1) des Systems;
b) Einstellen der Klammerkraft von lastklammernden Greifern auf eine vorbestimmte anfängliche Stufe;
c) bei Bedarf Erhöhen (6) der Klammerkraft auf eine höhere anfängliche Stufe;
d) Beginnen des Überwachens einer relativen Bewegung (9) zwischen einer Last und den lastklammernden Greifern;
e) im Falle des Erkennens einer Bewegung (9) zwischen der Last und den lastklammernden Greifern, Optimieren (10) des Klammerns, bis die Bewegung angehalten hat.

6. Verfahren nach Anspruch 5, **dadurch gekennzeichnet, dass** die Anzahl von anfänglichen Lastklammerstufen zwei oder mehr beträgt.

7. Verfahren nach Anspruch 5 oder 6, **dadurch gekennzeichnet, dass** das Verfahren eine Beobachtung über das Einleiten (3) eines Hubs beinhaltet.

8. Verfahren nach einem der Ansprüche 5 bis 7, **dadurch gekennzeichnet, dass** die Auswahl einer anfänglichen Lastklammerstufe automatisch auf der Grundlage eines Signals, das von einem Schalter/Sensor kommt, eines externen Systems oder auf der Grundlage eines Signals, das manuell vom Fahrer erhalten wird, durchgeführt wird.

9. Ansatz, der an einem Gabelstapler montierbar ist, **dadurch gekennzeichnet, dass** er ein Steuersystem nach einem der Ansprüche 1 bis 4 enthält.

10. Gabelstapler, **dadurch gekennzeichnet, dass** er einen Ansatz nach Anspruch 9 enthält, der an einem Gabelstapler montierbar ist.

## Revendications

1. Système de commande pour une fixation de chariot élévateur à fourche, ledit système comprenant :
a) un régulateur utilisé pour contrôler des pinces de serrage de charge ;
b) ledit régulateur réglant la force de serrage des pinces à un niveau initial prédéterminé ;
c) ledit régulateur étant alimenté avec un signal (5) d'un capteur de glissement concernant un glissement de charge entre les pinces de serrage ;
d) un signal arrivant dans ledit régulateur pour régler la force de serrage à un niveau initial plus élevé ; **caractérisé en ce que**
e) ledit régulateur règle automatiquement, si nécessaire, la force de serrage des pinces à un deuxième niveau initial plus élevé prédéterminé ;
f) ledit régulateur est alimenté avec un signal d'un capteur de glissement concernant un glissement de charge et un serrage supplémentaire requis (10) tout au long d'une levée entière et d'un transfert entier de la charge.

2. Système de commande selon la revendication 1, **caractérisé en ce que** le système de commande a son régulateur alimenté avec un signal concernant l'initiation d'un levage.

3. Système de commande selon la revendication 1, **caractérisé en ce que** le signal pour déterminer un niveau de force de serrage initial est obtenu automatiquement d'un commutateur/capteur sur la base d'un signal venant d'un système externe, ou manuellement du conducteur.

4. Système de commande selon l'une quelconque des revendications précédentes, **caractérisé en ce que** le nombre de niveaux de force de serrage initiaux est au moins de deux ou plus.

5. Procédé pour le levage d'une charge avec un système de commande selon la revendication 1, ledit procédé **se caractérisant en ce qu'**il comprend les étapes suivantes :
a) le réglage d'un système à un mode de veille en activant (1) le système ;
b) le réglage de la force de serrage de pinces de serrage de charge à un niveau initial prédéterminé ;
c) si nécessaire, l'augmentation (6) de la force de serrage à un niveau initial plus élevé ;
d) le démarrage de la surveillance d'un déplacement relatif (9) entre une charge et les pinces de serrage de charge ;
e) en cas de détection d'un déplacement (9) entre la charge et les pinces de serrage de charge, l'optimisation (10) du serrage jusqu'à l'arrêt du mouvement.

6. Procédé selon la revendication 5, **caractérisé en ce que** le nombre de niveaux de serrage de charge initiaux est de deux ou plus.

7. Procédé selon la revendication 5 ou 6, **caractérisé en ce que** le procédé comprend une observation sur l'initiation (3) d'un levage.

8. Procédé selon l'une quelconque des revendications 5-7, **caractérisé en ce que** la sélection d'un niveau de serrage de charge initial est réalisée automatiquement sur la base d'un signal venant d'un commutateur/capteur, d'un système externe, ou sur la base d'un signal obtenu manuellement du conducteur.

9. Fixation pouvant être montée sur un chariot élévateur à fourche, **caractérisée en ce qu'**elle comprend un système de commande selon l'une quelconque des revendications 1-4.

10. Chariot élévateur à fourche, **caractérisé en ce qu'**il comprend une fixation selon la revendication 9 pouvant être montée sur un chariot élévateur à fourche.
